# EUROPÄISCHE PATENTSCHRIFT

(11) **EP 1 583 599 B1**
(45) Veröffentlichungstag und Bekanntmachung des Hinweises auf die Patenterteilung: **30.04.2008**
(21) Anmeldenummer: 04701604.3
(22) Anmeldetag: 13.01.2004
(51) Int. Cl.: B01D 39/20, F01N 3/022, B01D 46/24, B23K 33/00

(54) **VERFAHREN ZUM FUEGEN VON DUENNEN BLECHARTIGEN SINTERMETALLELEMENTEN SOWIE DARAUS HERGESTELLTER FILTERKOERPER**
METHOD FOR JOINING THIN SHEET-TYPE SINTERED METAL ELEMENTS, AND FILTER BODY PRODUCED THEREFROM
PROCEDE POUR ASSEMBLER DES ELEMENTS EN METAL FRITTE MINCE DU TYPE TOLE, ET CORPS FILTRANT REALISE A PARTIR DE TELS ELEMENTS

(30) Priorität: 13.01.2003 DE 10301033
(43) Veröffentlichungstag der Anmeldung: 12.10.2005
(73) Patentinhaber: HJS Fahrzeugtechnik GmbH & Co. KG, 58706 Menden (DE)
(72) Erfinder: SCHULTE, Hermann-Josef, 58710 Menden (DE); KOLL, Jochen, 59755 Arnsberg (DE)
(74) Vertreter: Haverkamp, Jens
(86) Internationale Anmeldenummer: PCT/EP2004/000158
(87) Internationale Veröffentlichungsnummer: WO 2004/062770

(56) Entgegenhaltungen:
- EP-A- 1 371 827
- WO-A-00/01463
- WO-A-02/102494
- DE-U- 20 306 641
- US-A- 5 266 279

## Beschreibung

Die Erfindung betrifft ein Verfahren zum Fügen von dünnen blechartigen Sintermetallelementen, gebildet aus einem mit Sintermetall gefüllten Öffnungen aufweisenden Träger zum Erstellen eines Sintermetallfilterelements und/oder eines Sintermetallfilterkörpers. Ferner betrifft die Erfindung einen Sintermetallfilterkörper mit anströmseitig und/oder abströmseitig endseitig durch Fügen verschlossenen Filtertaschen, hergestellt aus solchen Sintermetallfilterelementen.

Dünne blechartige Sintermetallelemente sind beispielsweise Sintermetallstreifen oder -bleche. Diese werden eingesetzt, um daraus Filterelemente bzw. Filterkörper für Abgaspartikelfilter herzustellen. Das Sintermetallfiltermaterial umfasst einen Träger aus Metall mit Öffnungen, die wiederum mit Sintermetallpulver gefüllt und einem Sinterprozess unterzogen worden sind. Als Träger werden in aller Regel Drahtgewebe oder Streckmetall eingesetzt. Verwendet werden solche Sintermetallbleche oder -Streifen zur Herstellung von Abgaspartikelfiltern, denn durch die metallene Beschaffenheit des Sintermetallbleches vermag ein daraus hergestellter Filterkörper nicht nur den hohen Temperaturen des Abgasstromes, sondern auch den weitaus höheren Temperaturen standzuhalten, die bei einer Regeneration eines solchen Filterkörpers durch Bewirken eines Russabbrandes entstehen. Zur Erstellung eines solchen, etwa aus WO 02/102494 A1 bekannten Filterkörpers werden einzelne Filtertaschen durch Kanten eines solchen Sintermetallabschnittes oder -streifens gebildet. Zum Schließen dieser gekanteten Filtertaschen ist es notwendig, eine Längsseite und eine Stirnseite des Filtermaterialstreifens miteinander zu verbinden. Die Filtertaschen sind bei einem vorbekannten Filterkörper in radialer Richtung und in Richtung der Längsachse des Filterkörpers keilförmig verjüngt ausgebildet, so dass die beiden zu verbindenden Filtertaschenwandabschnitte am verjüngten Ende einer solchen Filtertasche aneinander liegen. Verbunden werden diese Filtertaschenwände zum Erstellen einer Filtertasche üblicherweise durch Rollennahtschweißen. Dieses ist auch ohne weiteres möglich, da die aufeinander liegenden Filtertaschenwandabschnitte zum Fügen problemlos durch den Rollenspalt einer Rollennahtschweißanlage hindurch geführt werden können.

Zur Ausbildung des eigentlichen Filterkörpers werden bei dem vorbekannten Filterkörper um ein Stützrohr radial eine Vielzahl derartiger, zuvor erstellter Filtertaschen angeordnet. Zum Verschließen des Filterkörpers bzw. zum Trennen der Reinseite von der russbeladenen Seite (Schmutzseite) ist es notwendig, die aneinander grenzenden Wandabschnitte der einseitig offenen Filtertaschen miteinander zu fügen. Da die Öffnungsweite der Taschen nur wenige Millimeter beträgt und sich diese radial von außen nach innen zudem verjüngen, kann diese benötigte stoffliche Verbindung nicht durch eine Rollennahtschweißung erstellt werden. Man hat daher versucht, diese aneinander grenzenden Wände der Filtertaschen miteinander durch Schmelzschweißen zu verbinden. Befriedigende Schweißergebnisse konnten jedoch nicht erzielt werden; es war nicht möglich, gleichmäßige Schweißnahtverläufe zu erzeugen. Entsprechendes gilt beim Fügen dieser aneinandergrenzenden Filtertaschenwände durch einen Lötprozess.

Ausgehend von dem diskutierten Stand der Technik liegt der Erfindung daher die Aufgabe zugrunde, ein Verfahren zum Fügen von eingangs genannten Sintermetallelementen sowie einen daraus hergestellten Filterkörper vorzuschlagen, mit bzw. bei dem eine bestimmungsgemäße stoffliche Verbindung von zwei Sintermetallelementabschnitten gestattet bzw. gegeben ist, ohne die zum vorbekannten Stand der Technik aufgezeigten Nachteile in Kauf nehmen zu müssen.

Diese Aufgabe wird erfindungsgemäß zum einen durch ein eingangs genanntes, gattungsgemäßes Verfahren gelöst, bei dem vor dem Schritt des Fügens die Porosität in den den Fügebereich eines Sintermetallelements begrenzenden Materialbereichen durch Einbringen von feinkörnigen, den beim anschließenden Fügen auftretenden Temperaturen standhaltenden Partikeln in den Porenhohlraum der den Fügebereich begrenzenden Materialbereiche herabgesetzt wird.

Ferner wird diese Aufgabe erfindungsgemäß durch einen eingangs genannten gattungsgemäßen Filterkörper gelöst, bei dem zumindest ein endseitiger Verschluss einen Fügebereich aufweist, der durch einen Materialbereich mit durch feinkörnige Partikel verfülltem Porenhohlraum begrenzt ist.

Bei dem vorbeschriebenen Verfahren wird vor dem Schritt des Fügens die Porosität der Sintermetallelemente in denjenigen Bereichen, die an die zu fügenden Abschnitte grenzen, herabgesetzt. Dies ist im Falle des Filterkörpers derjenige Materialbereich, der an den Fügebereich zum endseitigen Verschließen angrenzt. Das Herabsetzen der Porosität in den vorbeschriebenen Bereichen erfolgt durch Einbringen von feinkörnigen Partikeln in den Porenhohlraum dieser Materialbereiche, etwa durch einen Schlämmvorgang. Der Porenhohlraum der zu fügenden Bereiche bzw. Abschnitte der Sintermetallelemente bleibt dagegen grundsätzlich unverfüllt. Durch diese Maßnahme kann das beim Fügen zugegebene Material nur in den Porenhohlraum des eigentlichen Fügebereiches bzw. -abschnittes eindringen. Ein unkontrolliertes kapillares Wegsaugen von zum Fügen eingesetztem Material ist somit wirksam verhindert. Die Porosität der Sintermetallelemente im Bereich ihrer zu fügenden Bereiche oder Abschnitte wird genutzt, damit ein beim Fügen zugegebenes Material, beispielsweise Lot, in den Porenhohlraum dieser Bereiche oder Abschnitte eindringt. Zum einen wird dadurch eine bessere Verklammerung des Lotes an dem Sintermetallelement bereitgestellt. Zum anderen wird durch Eindringen des beim Fügen zugegebenen Materials in den Porenhohlraum dieser Abschnitte gewährleistet, dass das zugegebene Material auch in Kontakt mit dem metallenen Träger des Sintermetallelements tritt und mit diesem verbunden wird. Folglich ist die Verbindung zwischen dem zum Fügen vorgesehenen Bereich oder Abschnitt des Sintermetallelementes mit dem zum Fügen eingesetzten Material, beispielsweise dem Lot, deutlich widerstandsfähiger verglichen mit einer Verbindung, bei der das zugegebene Material lediglich mit der Oberseite eines zu fügenden Metallteils verbunden wird.

Die Partikel zum Herabsetzen der Porosität sind naturgemäß sehr feinkörnig und insbesondere deutlich feinkörniger als die durchschnittliche Porengröße des Sintermetallelements und weisen eine solche Temperaturbeständigkeit auf, dass diese den beim Fügen auftretenden Temperaturen standhalten, mithin nicht schmelzen und somit nicht den zuvor verschlossenen Porenhohlraum wieder freigeben. Als Partikel sind beispielsweise anorganisch keramische Partikel und/oder sogenannte Nanopartikel einsetzbar. Letztendlich können sämtliche Partikel oder Partikelgemische zum Herabsetzen der Porosität verwendet werden, die sich in den Porenhohlraum einbringen lassen, sich darin festsetzen und den beim Fügen auftretenden Temperaturen standhalten.

Eingebracht werden können diese Partikel unter Verwendung eines flüssigen Mediums im Wege eines Einschlämmprozesses. Ein solches Einschlämmen kann mechanisch unterstützt erfolgen, wobei durch mechanische Elemente das Medium mit den darin als Suspension verteilten Partikeln eingestrichen wird. Vorteilhaft ist der Einsatz eines Binders, mit dem die Partikel untereinander und in den Hohlräumen nach Trocknung des flüssigen Mediums haften bleiben. Der Binder braucht grundsätzlich nicht temperaturbeständig zu sein, da beim Fügen nicht die Gefahr besteht, dass die in den Porenhohlraum eingebrachten Partikel in nennenswertem Maße aus diesen soweit ausgetrieben werden könnten, dass zugeführtes Fügematerial, beispielsweise Lot, von dem zu fügenden Metallteil in nennenswertem Maße aufgesaugt werden könnte.

Zur Verstärkung der zu fügenden Bereiche bzw. Abschnitte eines Sintermetallelements kann es zweckmäßig sein, in den zu fügenden Bereichen eine Materialverdickung durch ein oder mehrfaches Kanten, zweckmäßigerweise um Kantachsen parallel zum äußeren Abschluss herbeizuführen. Dabei kann vorgesehen sein, dass ein Vollmaterialstreifen in den gekanteten Abschnitt mit eingebracht oder auch ohne ein solches Kanten verwendet wird.

Aus verfahrenstechnischen Gründen wird der die Fügebereiche begrenzende Materialbereich mit reduziertem Porenvolumen eine gewisse von dem Fügebereich wegweisende Erstreckung aufweisen. An diesen Materialbereich mit verfülltem Porenhohlraum schließen die Abschnitte des Sintermetallelements an, die die zum Filtern wirksamen Filterwände eines daraus hergestellten Filterkörpers darstellen. Nach dem Fügen ist durch den Materialbereich mit herabgesetztem Porenvolumen ein Übergangsbereich hinsichtlich der Steifigkeit der gefügten Elemente geschaffen. Der Übergangsbereich ist durch die Verfüllung seines Porenhohlraumes weniger steif als die gefügten Bereiche oder Abschnitte des Sintermetallelements, jedoch steifer als die übrigen Abschnitte des Sintermetallelements. Durch diesen Übergang vermag ein aus derartigen Sintermetallelementen hergestellter Filterkörper auch in einem Umfeld mit Vibrationen, wie dieses im Abgasstrang einer Brennkraftmaschine regelmäßig der Fall ist, langlebig standzuhalten.

Als Fügeprozesse zum Durchführen des beschriebenen Verfahrens lassen sich grundsätzlich Schweiß- oder Lötverfahren einsetzen.

Nachfolgend ist die Erfindung anhand eines Ausführungsbeispiels unter Bezugnahme auf die beigefügten Figuren beschrieben. Es zeigen:
- **Fig. 1:**: einen schematisierten Teilquerschnitt durch ein Sintermetallelement vor einem Schritt des Füllens des Porenhohlraumes in einem an einen zu fügenden Abschnitt grenzenden Abschnitt,
- **Fig. 2:**: das Sintermetallelement der Figur 1 mit dem porenverfüllten Abschnitt und
- **Fig. 3:**: einen schematisierten vereinfachten Längsschnitt durch den Filterkörper eines Abgaspartikelfilters, hergestellt aus miteinander gefügten Sintermetallelementen der Figur 2.

Ein dünnes, blechartiges Sintermetallelement 1 besteht aus einem bei dem dargestellten Ausführungsbeispiel als Drahtgewebe gebildeten Träger 2, von dem im Querschnitt drei Drähte 3, 3', 3" erkennbar sind. Die Maschen des als Träger 2 dienenden Drahtgewebes sind mit einem Sintermetall 4 gefüllt. Das Sintermetall 4 ist in die Maschen als Sintermetallpulver eingebracht und anschließend einem Sinterprozess unterworfen worden. Somit sind die einzelnen Körner des Sintermetallpulvers miteinander und mit dem Drahtgewebe verbunden. Das Sintermetall 4 ist in den Figuren sehr schematisiert dargestellt. Das Sintermetall 4 selbst ist porös und weist einen Porenhohlraum von etwa 50 % auf.

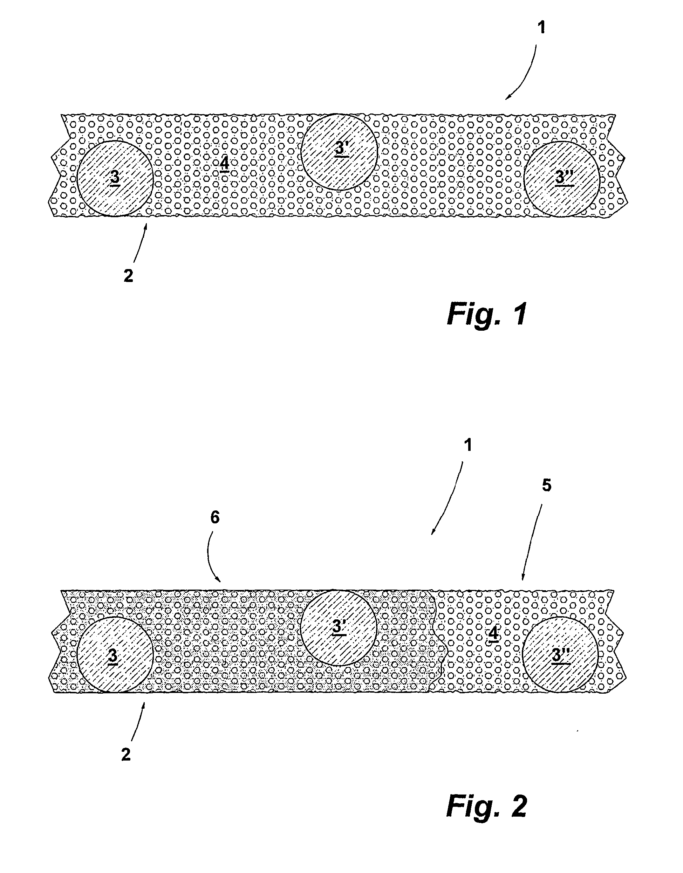

Das in Figur 1 dargestellte Sintermetallelement 1 soll mit seinem rechten Abschnitt mit einem weiteren, entsprechend aufgebauten Sintermetallelement durch Fügen verbunden werden. Zum Fügen bei dem dargestellten Ausführungsbeispiel ist ein Lötverfahren vorgesehen. Bevor das Sintermetallelement 1 mit seinem in den Figuren rechten Abschnitt mit dem weiteren Sintermetallelement durch das Lötverfahren verbunden wird, werden in dem Sintermetallelement 1 und entsprechend auch in dem weiteren Sintermetallelement diejenigen Abschnitte, die die zum Fügen vorgesehenen Abschnitte 5 der Sintermetallelemente 1 begrenzen und in denen die beiden Sintermetallelemente 1 somit nicht mehr verbunden werden sollen, vorbehandelt, um ein bestimmungsgemäßes Lötergebnis zu erreichen. Im Wege dieser Vorbehandlung wird der Porenhohlraum der Sintermetallelemente 1 im Bereich des an den zu fügenden Abschnitt 5 grenzenden Abschnittes 6 mit anorganisch keramischen Nanopartikeln verfüllt, und zwar soweit, dass ein kapillares Aufsaugen von zugeführtem Lot beim Fügen des Abschnitts 5 vermieden ist.

Die zum Füllen des Porenhohlraums vorgesehenen Nanopartikel werden in den mit dem Bezugszeichen 6 in Figur 2 bezeichneten Materialbereich des Sintermetallelements 1 eingeschlämmt. Dies erfolgt durch Bereitstellen eines flüssigen Mediums, in dem die Nanopartikel als Suspension enthalten sind. Teil dieser Lösung ist ebenfalls ein Binder zum Binden der einzelnen, in die Hohlräume eingeschlämmten Partikel untereinander sowie an den Porenwandungen.

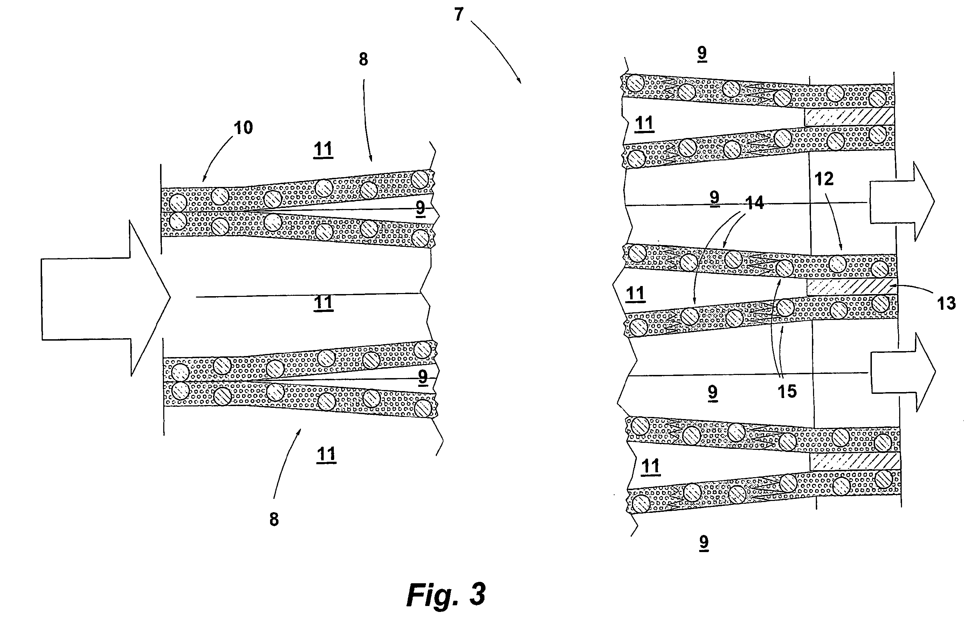

Figur 3 zeigt einen Filterkörper 7 eines Abgaspartikelfilters zum Entfernen von Ruß aus dem Abgasstrom einer Dieselbrennkraftmaschine. Der Filterkörper 7 ist aufgebaut aus einer Vielzahl einzelner taschenartiger Sintermetallfilterelemente 8, die wiederum aus Sintermetallelementen entsprechend derjenigen der Figuren 1 und 2 gebildet sind. Die Sintermetallfilterelemente 8 sind bei dem dargestellten Ausführungsbeispiel radial zueinander angeordnet, wie dieses aus WO 02/102494 A1 bekannt ist. Die Durchströmungsrichtung des Abgases durch den Filterkörper 7 ist schematisiert durch die Blockpfeile in Figur 3 dargestellt. Die Sintermetallfilterelemente 8 schließen jeweils einen taschenförmigen Hohlraum 9 ein, der sich sowohl radial von außen nach innen als auch zu seinem anströmseitigen Abschluss hin verjüngt. Im Bereich ihres anströmseitigen Abschlusses sind die Sintermetallfilterelemente 8 durch Rollennahtschweißen verschlossen. Dieser Abschnitt ist an einem Sintermetallfilterelement 8 der Figur 3 mit dem Bezugszeichen 10 gekennzeichnet. Die Wände der Sintermetallfilterelemente 8 bilden die Filterwände, durch die das Abgas hindurchtritt.

Zum Trennen der rußbeladenen Schmutzseite des Filterkörpers 7, gebildet durch die anströmseitige Außenfläche 11, von der Sauberseite sind jeweils die benachbart zueinander angeordneten abströmseitigen Endbereiche von jeweils zwei Sintermetallfilterelementen 8 miteinander durch Fügen verbunden. Ein solcher Fügebereich zwischen zwei Sintermetallfilterelementen 8 ist in Figur 3 mit dem Bezugszeichen 12 gekennzeichnet. Zwischen den beiden den Fügebereich 12 definierenden Abschnitten der Sintermetallfilterelemente 8 ist jeweils ein Vollmaterialstreifen 13 angeordnet. Der Vollmaterialstreifen 13 dient zum Erhöhen der Stabilität des Filterkörpers 7 im Bereich seiner abströmseitigen Stirnfläche. Ferner dient der Vollmaterialstreifen 13 dem Zweck, die Filterwände auf der Schmutzseite des Filterkörpers 7 zur Ausbildung eines Aschespeichers im Bereich des endseitigen Verschlusses voneinander zu beabstanden. Der Filterkörper 7 ist in einem in der Figur nicht dargestellten Gehäuse mit einem im Bereich des abströmseitigen Abschlusses angeordneten Flansch gehalten. Die an den den Fügebereich 12 bildenden Endabschnitte der Sintermetallfilterelemente 8 grenzenden Bereiche 14 sind porenverfüllt, wie dies zu dem Sintermetallelement 1 der Figuren 1 und 2 beschrieben ist. Dadurch ist verhindert, dass beim Fügen der Sintermetallfilterelemente 8 im Fügebereich 12 zugegebenes Material von dem Fügebereich 12 infolge der Porosität des benachbarten Sintermetallmaterials über Maßen weggesogen wird.

Das Fügen der Sintermetallfilterelemente 8 im Bereich des Fügebereiches 12 erfolgt durch Löten. Der Fügebereich 12 ist in Figur 3 ohne eine den Fügevorgang bildlich wiedergebende Signatur dargestellt. Durch den Lötvorgang wird der Fügebereich 12 auch bedingt durch den Einsatz des Vollmaterialstreifens 13 relativ steif, was auch gewünscht ist, um dem Filterkörper 7 im Bereich seiner abströmseitigen Stirnfläche die notwendige Stabilität zu verleihen. Der Bereich zwischen dem eigentlichen Fügebereich 12 und dem porenverfüllten Materialbereich 14 kann als Übergangsbereich 15 bezeichnet werden. Dieser Übergangsbereich 15 ist durch eine geringere aufgesaugte Lotmenge gekennzeichnet, verglichen mit der in dem eigentlichen Fügebereich 12 aufgesaugten Lotmenge. Dieses stellt sich ein, da eine exakte Begrenzung des porenverfüllten Bereiches 14 über die Materialstärke des Sintermetallelements nicht möglich ist. Die Steifigkeit dieses Übergangsbereiches 15 ist aufgrund der geringeren aufgesaugten Lotmenge geringer als die Steifigkeit des eigentlichen Fügebereiches 12. Gleichwohl ist die Steifigkeit dieses Bereiches 15 höher als die Steifigkeit der Sintermetallfilterelemente 8 in den übrigen, zum eigentlichen Filtern vorgesehenen Wandabschnitten. Mithin stellt der Bereich 15 hinsichtlich der Steifigkeit einen Übergangsbereich zwischen den übrigen Abschnitten der Sintermetallfilterelemente 8 und den Fügebereichen 12 dar. Dieses trägt nicht unmaßgeblich zur Erhöhung der Lebensdauer des Filterkörpers, insbesondere bei einem Einsatz in einem vibrierenden Umfeld dar, wie dieses in dem Abgasstrang einer Brennkraftmaschine der Fall ist.

### Bezugszeichenliste

- 1: Sintermetallelement
- 2: Träger
- 3, 3', 3": Draht
- 4: Sintermetall
- 5: Abschnitt, zum Fügen vorgesehen
- 6: Materialbereich, porenverfüllt
- 7: Filterkörper
- 8: Sintermetallfilterelement
- 9: Hohlraum, Filtertasche
- 10: Fügeabschnitt
- 11: Außenfläche des Filterkörpers
- 12: Fügebereich
- 13: Vollmaterialstreifen
- 14: Materialbereich, porenverfüllt
- 15: Übergangsbereich

## Patentansprüche

1. Verfahren zum Fügen von dünnen blechartigen Sintermetallelementen (1), gebildet aus einem mit Sintermetall gefüllten Öffnungen aufweisenden Träger zum Erstellen eines Sintermetallfilterelements (8) und/oder eines Sintermetallfilterkörpers (7), **dadurch gekennzeichnet, dass** vor dem Schritt des Fügens die Porosität in den den Fügebereich (5, 12) eines Sintermetallelements (1) begrenzenden Materialbereichen (6, 14) durch Einbringen von feinkörnigen, den beim anschließenden Fügen auftretenden Temperaturen standhaltenden Partikeln in den Porenhohlraum der den Fügebereich (5, 12) begrenzenden Materialbereiche (6, 14) herabgesetzt wird.

2. Verfahren nach Anspruch 1, **dadurch gekennzeichnet, dass** die Partikel unter Verwendung eines flüssigen Mediums in den Porenhohlraum eingeschlämmt werden.

3. Verfahren nach Anspruch 1 oder 2, **dadurch gekennzeichnet, dass** zusammen mit den Partikeln ein Binder in die Poren eingebracht wird.

4. Verfahren nach einem der Ansprüche 1 bis 3, **dadurch gekennzeichnet, dass** als Partikel zum Füllen der Poren anorganisch keramische Partikel eingesetzt werden.

5. Verfahren nach einem der Ansprüche 1 bis 4, **dadurch gekennzeichnet, dass** die miteinander zu fügenden Abschnitte der Sintermetallelemente einzeln oder gemeinsam miteinander vor oder nach dem Schritt des Herabsetzens der Porosität vor dem Schritt des Fügens verdichtet werden.

6. Verfahren nach Anspruch 5, **dadurch gekennzeichnet, dass** zum Materialverdicken der zu fügenden Abschnitte das oder die Sintermetallelemente ein- oder mehrfach gekantet werden.

7. Verfahren nach einem der Ansprüche 1 bis 6, **dadurch gekennzeichnet, dass** zum Materialverdicken der zu fügenden Abschnitte ein Materialstreifen (13) aus einem nicht porösen Vollmaterial zwischen zwei zu fügende Sintermetallfilterelementabschnitte angeordnet wird.

8. Verfahren nach einem der Ansprüche 1 bis 7, **dadurch gekennzeichnet, dass** die Metallteile durch Löten miteinander verbunden werden.

9. Sintermetallfilterkörper mit anströmseitig und/oder abströmseitig endseitig durch Fügen verschlossenen Filtertaschen (9) hergestellt mit dem Verfahren nach einem der Ansprüche 1 bis 8, **dadurch gekennzeichnet, dass** zumindest ein endseitiger Verschluss einen Fügebereich (12) aufweist, der durch einen Materialbereich (14) mit durch feinkörnige Partikel verfülltem Porenhohlraum begrenzt ist.

10. Filterkörper nach Anspruch 9, **dadurch gekennzeichnet, dass** der Fügebereich eines Sintermetallfilterelements durch ein- oder mehrfaches Kanten parallel zu seinem Abschluss verdickt ist.

11. Filterkörper nach Anspruch 9 oder 10, **dadurch gekennzeichnet, dass** in dem Fügebereich (12) ein Materialstreifen (13) aus einem nicht porösen, fügbaren Vollmaterial angeordnet ist.

## Claims

1. Method of joining thin sheet-type sintered metal elements (1), formed from a support having openings filled with sintered metal for producing a sintered metal filter element (8) and/or a sintered metal filter body (7), **characterised in that**, prior to the joining step, the porosity in the material regions (6, 14) defining the joining region (5, 12) of a sintered metal element (1) is reduced by introducing fine-grain particles, which resist the temperatures occurring during the subsequent joining process, into the pore cavity of the material regions (6, 14) defining the joining region (5, 12).

2. Method according to claim 1, **characterised in that** the particles are decanted into the pore cavity by the use of a liquid medium.

3. Method according to claim 1, or 2, **characterised in that** a bonding agent is introduced into the pores together with the particles.

4. Method according to one of claims 1 to 3, **characterised in that** inorganically ceramic particles are used as the particles for filling the pores.

5. Method according to one of claims 1 to 4, **characterised in that**, prior to the joining step, the portions of the sintered metal elements which are to be joined together are compacted, individually or jointly with one another, prior to or subsequent to the step of reducing the porosity.

6. Method according to claim 5, **characterised in that**, to thicken the material of the portions to be joined, the sintered metal element or elements is or are bent one or more times.

7. Method according to one of claims I to 6, **characterised in that**, to thicken the material of the portions to be joined, a material strip (13) formed from a non-porous solid material is disposed between two sintered metal filter element portions to be joined.

8. Method according to one of claims 1 to 7, **characterised in that** the metal parts are interconnected by soldering.

9. Sintered metal filter body having filter pockets (9), the ends of which are closed by joining at the leading edge and/or at the trailing edge, produced by the method according to one of claims 1 to 8, **characterised in that** at least one terminal closure has a joining region (12) which is defined by a material region (14) with a pore cavity filled by fine-grain particles.

10. Filter body according to claim 9, **characterised in that** the joining region of a sintered metal filter element is thickened by bending one or more times parallel to its closure.

11. Filter body according to claim 9 or 10, **characterised in that** a material strip (13), formed from a non-porous, joinable solid material, is disposed in the joining region (12).

## Revendications

1. Procédé pour assembler des éléments (1) en métal fritté minces du type tôle, constitués d'un support présentant des ouvertures remplies de métal fritté destiné à élaborer un élément filtrant (8) en métal fritté et/ou un corps filtrant (7) en métal fritté, **caractérisé en ce que**, avant l'étape d'assemblage, la porosité des zones de matériau (6,14) délimitant la zone d'assemblage (5, 12) d'un élément (1) en métal fritté est réduite par la mise en place de particules à granulométrie fine, résistantes aux températures survenant lors de l'assemblage ultérieur, dans l'espace creux poreux des zones de matériau (6,14) délimitant la zone d'assemblage (5,12).

2. Procédé selon la revendication 1 **caractérisé en ce que** les particules sont déposées dans l'espace ceux des pores en utilisant un medium liquide.

3. Procédé selon la revendication 1 ou 2 **caractérisé en ce qu'**un liant est mis en place dans les pores en même temps que les particules.

4. Procédé selon l'une des revendications 1 à 3, **caractérisé en ce qu'**on utilise en guise de particules pour remplir les pores, des particules céramiques inorganiques.

5. Procédé selon l'une des revendications 1 à 4 **caractérisé en ce que** les tronçons des éléments en métal fritté à assembler sont densifiés unitairement ou ensemble, avant ou après l'étape de réduction de la porosité avant l'étape d'assemblage.

6. Procédé selon la revendication 5 **caractérisé en ce que** le ou les éléments en métal fritté sont pliés une ou plusieurs fois afin d'épaissir le matériau des tronçons à assembler.

7. Procédé selon l'une des revendications 1 à 6 **caractérisé en ce qu'**une bande de matériau (13) constituée d'un matériau plein non poreux est placée entre deux tronçons des éléments en métal fritté à assembler afin d'épaissir le matériau des tronçons à assembler.

8. Procédé selon l'une des revendications 1 à 7, **caractérisé en ce que** les parties en métal soient solidarisées par brasage.

9. Corps filtrant en métal fritté comportant du côté amont et/ou du côté aval, des poches de filtrage (9) fermées par assemblage du côté de l'extrémité, fabriqué au moyen du procédé selon l'une des revendications 1 à 8, **caractérisé en ce qu'**au moins une fermeture située du côté de l'extrémité présente une zone d'assemblage (12) délimitée par une zone de matériau (14) constituée d'un espace creux poreux rempli par des particules à granulométrie fine.

10. Procédé selon la revendication 9 **caractérisé en ce que** la zone d'assemblage d'un élément en métal fritté est épaissi par une ou plusieurs opérations de pliage parallèlement à son extrémité.

11. Corps de filtre selon la revendication 9 ou 10, **caractérisé en ce qu'**il est disposé dans la zone d'assemblage (12) une bande de matériau (13) constitué d'un matériau plein non poreux apte à l'assemblage.
